Europäisches Patentamt

European Patent Office

Office européen des brevets

(19)

(11) **EP 1 102 673 B1**

(12) **EUROPÄISCHE PATENTSCHRIFT**

(45) Veröffentlichungstag und Bekanntmachung des Hinweises auf die Patenterteilung:
**12.12.2001 Patentblatt 2001/50**

(21) Anmeldenummer: **99936167.8**

(22) Anmeldetag: **21.07.1999**

(51) Int Cl.$^7$: **B29C 47/68**, B29C 47/08

(86) Internationale Anmeldenummer:
**PCT/AT99/00183**

(87) Internationale Veröffentlichungsnummer:
**WO 00/07800 (17.02.2000 Gazette 2000/07)**

(54) **VORRICHTUNG ZUR BEEINFLUSSUNG DES DURCHSTROMES VON IN DEN STRÖMUNGSFÄHIGEN ZUSTAND ERWÄRMTEM KUNSTSTOFFMATERIAL DURCH EIN GEHÄUSE**

DEVICE FOR INFLUENCING THE FLOW-THROUGH OF PLASTIC MATERIAL WHICH IS HEATED SUCH THAT IT CAN FLOW THROUGH A HOUSING

DISPOSITIF POUR INFLUER SUR LE DEBIT D'UNE MATIERE PLASTIQUE RECHAUFFEE DE MANIERE A POUVOIR S'ECOULER, A TRAVERS UN BOITIER

(84) Benannte Vertragsstaaten:
**AT BE CH CY DE DK ES FI FR GB GR IE IT LI LU MC NL PT SE**

(30) Priorität: **06.08.1998 AT 136198**

(43) Veröffentlichungstag der Anmeldung:
**30.05.2001 Patentblatt 2001/22**

(73) Patentinhaber:
• **BACHER, Helmut**
**A-4490 St. Florian (AT)**
• **SCHULZ, Helmuth**
**A-4490 St. Florian (AT)**
• **WENDELIN, Georg**
**A-4033 Linz (AT)**

(72) Erfinder:
• **BACHER, Helmut**
**A-4490 St. Florian (AT)**
• **SCHULZ, Helmuth**
**A-4490 St. Florian (AT)**
• **WENDELIN, Georg**
**A-4033 Linz (AT)**

(74) Vertreter: **Wildhack, Helmut, Dr. Dipl.-Ing.**
**Patentanwälte Wildhack - Jellinek**
**Landstrasser Hauptstrasse 50**
**1030 Wien (AT)**

(56) Entgegenhaltungen:
**EP-A- 0 050 949          GB-A- 2 073 038**
**US-A- 5 770 246**

**Beschreibung**

Die Erfindung bezieht sich auf eine Vorrichtung zur Beeinflussung des Durchstromes von in den strömungsfähigen Zustand erwärmtem Kunststoffmaterial durch ein Gehäuse, insbesondere eine Filtervorrichtung oder eine Umsteuervorrichtung für das Kunststoffmaterial, mit einem das Gehäuse durchsetzenden Durchströmkanal und einem in einer Bohrung des Gehäuses quer zur Längsrichtung des Durchstromkanales längsverschieblich geführten Kolben mit Kreisquerschnitt, welcher Kolben den Durchströmkanal kreuzt, wobei auf einem aus dem Gehäuse herausragenden Kolbenabschnitt außerhalb des Gehäuses ein ungeschlitzter Abstreifring aufgesetzt ist, für den ein mit dem Gehäuse verbundener Anschlag vorgesehen ist, sodass der Kolben relativ zum Abstreifring verschiebbar ist.

Solche Vorrichtungen sind den Anmeldern aus der Praxis in verschiedenen Bauweisen bekannt. Beispielsweise handelt es sich um eine Filtervorrichtung für in den plastifizierten Zustand versetztes thermoplastisches Kunststoffmaterial, wobei der Kolben ein in der Betriebsstellung der Vorrichtung im Durchströmkanal liegendes Filter trägt, welches die Verunreinigungen aus dem plastifizierten Kunststoffmaterial ausfiltert. Eine andere Bauweise bildet eine Umsteuervorrichtung für den Strom des Kunststoffmateriales. Stets bewirkt hiebei die Längsverschiebung des Kolbens eine Beeinflussung des Durchstromes des Kunststoffmateriales durch das Gehäuse. Im Falle einer Filtervorrichtung wird durch die erwähnte Verschiebung des Kolbens das Filter in eine Siebwechselstellung oder eine Rückspülstellung gebracht, sodass das Filter ersetzt oder gereinigt werden kann (z.B. AT 395.825 B, EP 250.695 B). Im Falle einer Umsteuervorrichtung bewirkt die Kolbenverschiebung, dass das in das Gehäuse eingeleitete Kunststoffmaterial das Gehäuse durch eine andere Auslassöffnung verlässt als im normalen Betriebszustand oder - etwa im Falle eines Absperrschiebers - völlig am Durchstrom durch das Gehäuse gehindert wird.

Bei Vorrichtungen der geschilderten Art ist es unvermeidlich, dass bei der Längsverschiebung des Kolbens Kunststoffmaterial aus dem Gehäuse austritt, obwohl der Kolben mit engstem Spiel im Gehäuse geführt ist, um die geringstmögliche Undichtheit zu erzielen. Das bei der Kolbenbewegung zwangsläufig aus dem Gehäuseinneren nach außen gezogene Kunststoffmaterial wird durch Wärme und den Einfluss des Luftsauerstoffes zersetzt. Die entstehende verkohlte Masse bildet eine harte Schicht, welche den Kolben umgibt und ihren Kunststoffcharakter weitgehend verloren hat. Zweck des Abstreifringes ist es, diese harte, aus dem ausgetretenen Leckmaterial gebildete Schicht vom Kolben bei dessen Längsverschiebung relativ zum Gehäuse abzustreifen. Ein solcher Abstreifring ist bei einem mit länglichem Ovalquerschnitt ausgebildeten Kolben aus GB 2,073.038 A bekannt.

Aus US A 5,770.246 ist eine Spritzgießmaschine mit einem Abstreifring bekannt, wobei der Innendurchmesser des Abstreifringes kleiner ist als der Durchmesser des Kolbenkopfes und größer als der Durchmesser des Kolbenschaftes.

Aus EP-A-50.949 ist ein kombinierter Dicht-, Lager- und Abstreifring bekannt, wobei der Innendurchmesser der Lippe des Dichtringes kleiner ist als der Durchmesser der Lagerfläche und des Endes der Lippe des Abstreifers.

Untersuchungen haben gezeigt, dass hierbei aber folgende Schwierigkeiten auftreten:

Der aus dem Gehäuse herausragende Abschnitt des Kolbens ist nicht beheizt und hat daher über seine axiale, nicht beheizte Länge einen Temperaturabfall von etwa 100°C. Dies bedeutet, daß der Durchmesser dieses Kolbens an seinem aus dem Gehäuse herausragenden Ende durch die entsprechend seiner tieferen Temperatur geringere Wärmedehnung um einige Zehntelmillimeter, je nach der Größe dieses Durchmessers, kleiner ist als im restlichen Abschnitt. Beim Einfahren des Kolbens in das beheizte Gehäuse wird daher von der Gehäusekante bzw. vom Abstreifring das aufgebrannte Schichtmaterial nur so weit abgeschabt, als es dem Bohrungsdurchmesser des Gehäuses bzw. dem Innendurchmesser des Abstreifringes entspricht. Es verbleibt daher am kälteren Ende des Kolbens eine aus diesem Material bestehende Schicht in einer Stärke, welche dem auf die geringere Wärmedehnung zurückzuführenden kleineren Durchmesser dieses Kolbenendes entspricht. Während der Verweilzeit des Kolbens in der in das Gehäuse eingefahrenen Stellung, z. B. Filterstellung bei einer Filtervorrichtung bzw. Normalstellung der Umsteuervorrichtung od.dgl., erwärmt sich dieser Kolbenabschnitt auf die Gehäusetemperatur und dehnt sich daher entsprechend aus. Der aus dem verkokten Kunststoff bestehende Kolbenbelag wird dabei verdichtet. Dies bedingt eine unkontrollierbare Erschwerung des Wiederausfahrens des Kolbens, gegebenenfalls sogar eine Blockierung des Kolbens und damit der gesamten Vorrichtung.

Die Erfindung setzt sich zur Aufgabe, diese Schwierigkeiten zu überwinden und eine Vorrichtung der eingangs geschilderten Art so zu verbessem, daß ihre Funktion verläßlicher wird. Die Erfindung löst diese Aufgabe dadurch, daß der Innendurchmesser des Abstreifringes geringer ist als der Durchmesser der Bohrung des Gehäuses und auch geringer als der Durchmesser des dem Gehäuse abgewendeten, aus dem Gehäuse herausragenden Endes des Kolbenabschnittes im kühlsten Betriebszustand desselben, sodaß der Abstreifring stets mit Vorspannung auf dem Kolbenabschnitt sitzt. Dieser strenge Sitz des Abstreifringes auf dem Kolben hat zur Folge, daß der Abstreifring stets mit Vorspannung auf dem Kolben sitzt, unabhängig davon, welchen temperaturbedingten Dehnungen bzw. Schrumpfungen der Kolben unterworfen ist. Natürlich bedeutet dies, daß im Abstreifring entsprechende Zugspannungen auftreten, doch bereitet es keine Schwierigkeiten, die Materialwahl für den Abstreifring, insbesondere seine Warmfestigkeitswerte, so zu wählen, daß die auftretenden Zugspannungen bruchfrei aufgenommen werden, da ja die auftretenden Temperaturen zumindest im wesentlichen bekannt sind.

Vorzugsweise ist erfindungsgemäß der Innendurchmesser des Abstreifringes um 0,12 bis 0,15% geringer als der Durchmesser der Bohrung des Gehäuses. Dieses Intervall hat sich durch Versuche als für die meisten Anwendungsfälle brauchbar erwiesen.

Das Maß der Vorspannung, mit welchem der Abstreifring auf dem Kolbenabschnitt sitzt, ist entsprechend den vorliegenden Gegebenheiten zu wählen. In der Regel ist im Rahmen der Erfindung die Anordnung so getroffen, daß der Abstreifring mit einer durchschnittlichen Flächenpressung von 1000 bis 2000 N/cm$^2$ auf dem Kolben sitzt.

Gemäß einer Weiterbildung der Erfindung besteht zwischen dem Abstreifring und dem Gehäuse ein durch den Anschlag begrenztes, in axialer Richtung des Kolbens gemessenes Spiel von 0 bis 4 mm. Der Nullwert, also kein Spiel, gilt für Vorrichtungen, die für niedrigviskose Kunststoffe Anwendung finden, wie z.B. für PET-Vormonomere oder Wachse od.dgl. Bei solchen Kunststoffen ist die Gefahr des Austrittes von Leckmaterial auch dann gegeben, wenn sich der Kolben im ausgefahrenen Zustand befindet und im Gehäuse ein hoher Massedruck herrscht. Hier wirkt der Abstreifring ohne axiales Spiel ähnlich einer Stopfbüchse. Für hochviskose Kunststoffe kommt hingegen das erwähnte Intervall für das Spiel zwischen Abstreifring und Gehäuse in Frage und es kann im Bereich dieses axialen Spieles ein freier Austritt von Leckmaterial beim Ausfahren des Kolbens erfolgen.

In der Zeichnung ist der Erfindungsgegenstand anhand von Ausführungsbeispielen schematisch veranschaulicht.

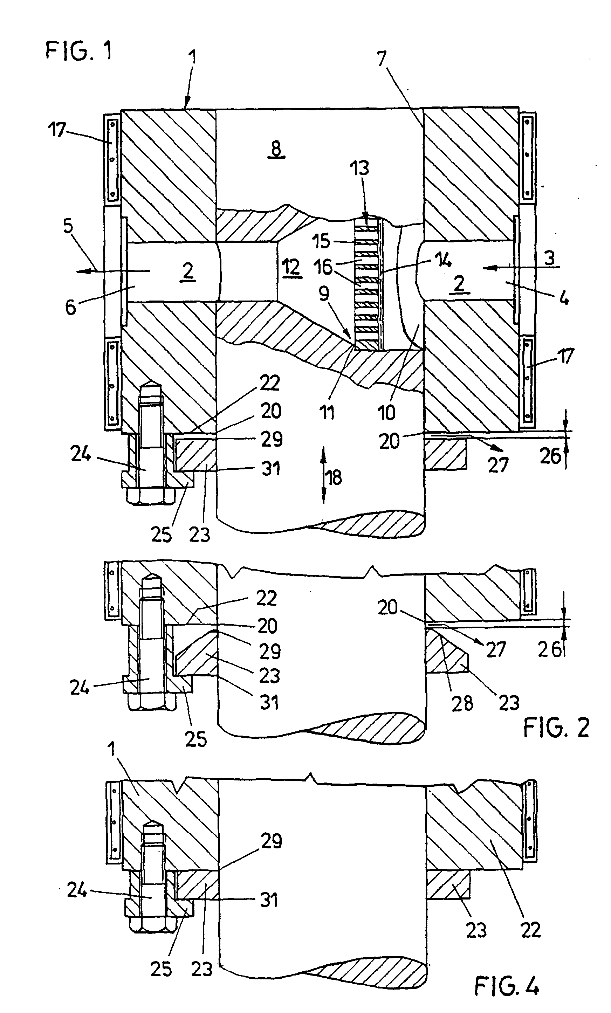

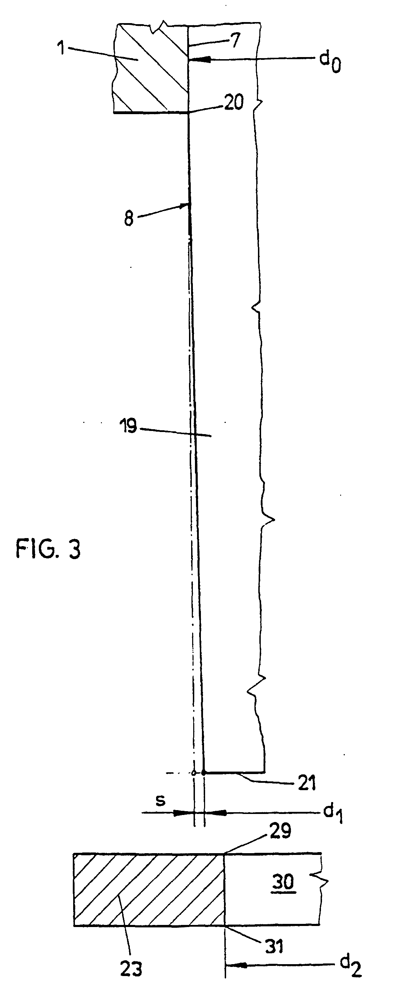

Fig. 1 zeigt eine als Filtervorrichtung für Kunststoffmaterial ausgebildete Vorrichtung im Schnitt entlang der Kolbenachse, mit axialem Spiel für den Abstreifring. Fig. 2 zeigt im Schnitt ähnlich Fig. 1 eine Ausführungsvariante für den Abstreifring. Fig. 3 zeigt schematisch den aus dem Gehäuse ausgefahrenen Kolben und den davon abgenommenen Abstreifring in einem Schnitt ähnlich Fig. 1. Fig. 4 zeigt im Schnitt ähnlich Fig. 1 eine Ausführungsform ohne axiales Spiel für den Abstreifring.

Bei der Filtervorrichtung nach Fig. 1 hat ein Gehäuse 1 einen Durchstromkanal 2 für die zu filtrierende strömungsfähige Masse, insbesondere thermoplastisches Kunststoffmaterial, das zu Recyclingzwecken von Verunreinigungen gereinigt werden soll. In diesen Durchströmkanal 2 tritt das zu filtrierende Material in Richtung des Pfeiles 3 durch eine Zuströmöffnung 4 ein. Das Filtrat strömt in Richtung des Pfeiles 5 durch eine Abströmöffnung 6 aus dem Gehäuse 1 ab. Normal zur Achsrichtung des Durchströmkanales 2 verläuft eine Bohrung 7 im Gehäuse 1, welche den Durchströmkanal 2 kreuzt. In dieser Bohrung 7 ist ein Kolben 8 mit Kreisquerschnitt längsverschieblich, aber mit enger Passung geführt. In diesem Kolben 8 ist ein Siebnest 9 eingearbeitet, welches einen gegenüber dem Durchmesser des Durchströmkanales 2 vergrößerten Zustromraum 10 für das zu filtrierende Material aufweist, welcher Raum 10 über eine stufenförmige Absetzung 11 in einen kegelstumpfförmigen Abstromraum 12 übergeht, der zum abstromseitig liegenden Teil des Durchströmkanales 2 führt. Zwischen dem Zustromraum 10 und dem Abstromraum 12 liegt ein Filter 13 für die Abscheidung der Verunreinigungen aus dem zugeführten Kunststoffmaterial. Dieses Filter 13 hat eine eigentliche Filterschicht 14, die von einer mit feinen Durchgangsöffnungen versehenen Metallplatte gebildet sein kann, wobei die Größe dieser Durchgangsöffnungen so bemessen ist, daß die abzuscheidenden Verunreinigungen zurückgehalten werden. Diese Filterschicht 14 ist durch eine Stützplatte 15 versteift, die sich gegen die Absetzung 11 abstützt. Die Stützplatte hat kanalförmige Öffnungen 16, deren Durchmesser wesentlich größer ist als jener der Durchgangsöffnungen der Filterschicht 14.

Am Außenmantel des Gehäuses 1 ist eine elektrische Widerstandsheizung 17 angeordnet, mit welcher die Vorrichtung und damit das in ihr strömende Kunststoffmaterial auf der gewünschten Arbeitstemperatur gehalten werden kann.

Um das Filter 13 reinigen oder auswechseln zu können, ist der einen Siebträger bildende Kolben 8 in Achsrichtung (Doppelpfeil 18) in seiner von der Bohrung 7 gebildeten Führung verschiebbar. Hiefür ist ein nicht dargestellter Antrieb vorgesehen. Diese Axialverschiebung hat zur Folge, daß zumindest zeitweise ein Abschnitt 19 (Fig. 3) der axialen Länge des Kolbens 8 aus dem Gehäuse 1 hervorragt und daher nicht beheizt ist. Dieser Abschnitt 19 hat daher eine geringere Temperatur als der innerhalb des Gehäuses 1 befindliche Abschnitt des Kolbens 8 oder nimmt diese geringere Temperatur im Laufe der Zeit an. Ferner hat die erwähnte axiale Verschiebung des Kolbens 8 zur Folge, daß Kunststoffschmelze, insbesondere in Filmdicke, aus dem Inneren des Gehäuses 1 durch die unvermeidlichen Undichtheiten nach außen gezogen wird und zumindest teilweise am Mantel des aus dem Gehäuse 1 herausragenden Kolbenabschnittes 19 verbleibt. Da der aus dem Gehäuse 1 herausragende Abschnitt 19 des Kolbens 8 dem Luftsauerstoff ausgesetzt ist, wird die auf seinem Mantel befindliche Kunststoffschmeize zersetzt und in kurzer Zeit verkohlt. Sie verliert dadurch ihre thermoplastischen Eigenschaften und bildet im Laufe der Zeit eine harte Schicht, welche diesen Kolbenabschnitt 19 umgibt. Man hat bisher angenommen, daß diese Schicht beim Wiedereinfahren des Kolbens 8 in das Gehäuse 1 durch die Gehäusekante 20 abgeschert wird. Dies ist jedoch nur zu einem geringen Teil der Fall, denn der aus dem Gehäuse 1 herausragende Abschnitt 19 des Kolbens 8 hat über seine nicht beheizte Länge einen erheblichen Temperaturabfall, der bei der Behandlung thermoplastischen Kunststoffgutes etwa 100°C beträgt. Dies bedeutet, daß das aus dem Gehäuse 1 herausragende Ende 21 (Fig. 3) des Kolbenabschnittes 19 infolge der geringeren Wärmedehnung einen Durchmesser hat, der um einige Zehntelmillimeter kleiner ist als der Durchmesser des nach wie vor im Gehäuse 1 befindlichen Abschnittes des Kolbens 8. Es verbleibt daher am kälteren Ende 21 des Kolbens 8 beim Wiedereinfahren eine Schicht aus verkoktem Kunststoffmaterial, deren Stärke an jeder Stelle dem erwähnten Wärmedehnungsunterschied entspricht. Nach Wiedereinfahren des Kolbens 8 in das Gehäuse 1 erwärmt sich aber der bisher kühlere Abschnitt 19 des Kolbens 8 auf die Temperatur des Gehäuses 1 und dehnt sich daher entsprechend aus. Der Belag aus verkohltem Kunststoff am Umfang des Kolbens 8 wird durch diese Kolbenausdehnung verdichtet und behindert bzw. verhindert das Wiederausfahren des Kolbens 8.

Um diese Schwierigkeiten zu überwinden, ist an der dem freien Ende 21 des Kolbens 8 zugewendeten Seitenwand 22 des Gehäuses 1 ein ungeschlitzter Abstreifring 23 so befestigt, daß er sich relativ zur Wand 22 nicht oder nur begrenzt bei der Längsverschieburig des Kolbens 8 bewegen kann. Dadurch übt dieser Abstreifring 23 eine Abstreiffunktion aus, durch welche die vom Kolben 8 bei dessen Ausfahren aus dem Gehäuse 1 mitgenommene Kunststoffschicht vom Kolben 8 abgestreift wird. Um dies für alle Temperaturbedingungen des Kolbens 8 bzw. seines Abschnittes 19 sicherzustellen, ist dieser Abstreifring 23 mit einer Vorspannung auf den Kolben 8 aufgezogen, welche sämtliche temperaturbedingten Dehnungen bzw. Schrumpfungen des Kolbens 8 übersteigt. Es hat sich gezeigt, daß es hiezu genügt, den Innendurchmesser $d_2$ (Fig. 3) um 0,12 bis 0,15% geringer zu bemessen als den Durchmesser $d_0$ der Bohrung 7 des Gehäuses 1, in welcher der Kolben 8 geführt ist und welcher Durchmesser $d_0$ somit auch an der Kante 20 des Gehäuses 1 vorliegt Der Innendurchmesser $d_2$ des Abstreifringes 23 ist daher sicher kleiner als der Durchmesser $d_1$ der kühlsten Stelle des Kolbenabschnittes 19 (Stimende 21) im ausgefahrenen Zustand des Kolbens 8. Hiebei ist

$$d_1 = d_0 - (d_0 \cdot \alpha \cdot \Delta t),$$

worin $d_0$ die oben angegebene Bedeutung hat, $\alpha$ der Ausdehnungskoeffizient für den Kolben 8 ist und $\Delta t$ den Temperaturunterschied bedeutet, welcher zwischen dem Stirnende 21 und dem im Gehäuse 1 verbleibenden Abschnitt des Kolbens 8 besteht. Wie Fig. 3 zeigt, ergibt dieser kleinere Durchmesser $d_1$ ein Spiel s für das Stirnende 21 in Bezug auf die Kante 20, wobei

$$s = \frac{d_0 - d_1}{2}$$

ist. Hiebei sollte die Flächenpressung zwischen dem Abstreifring 23 und dem abzuschabenden Abschnitt 19 des Kolbens 8 sinnvoll zwischen 1000 und 2000 N/cm$^2$ liegen. Bedacht zu nehmen ist hiebei darauf, daß die im Abstreifring 23 auftretenden Zugspannungen die zulässige Warmfestigkeit des für den Abstreifring 23 verwendeten Werkstoffes nicht überschreiten.

Der Abstreifring 23 kann unbeweglich an der Seitenwand 22 des Gehäuses 1 festgelegt sein, z.B. durch eine Verschraubung 24 (Fig. 4). Der Abstreifring sitzt dann ähnlich einer Stopfbüchse am Gehäuse 1. Diese Bauweise eignet sich für niedrigviskose Kunststoffe, wie z.B. für PET-Vormonomere oder Wachse. Für hochviskose Kunststoffe ist es jedoch günstiger, dem Abstreifring 23 ein Spiel zu lassen, um welches er sich in axialer Richtung des Kolbens 8 relativ zum Gehäuse 1 bewegen kann. Dieses Spiel 26 ist aus den Ausführungsformen nach den Fig. 1 und 2 ersichtlich, es ist durch einen von der Verschraubung 24 gehaltenen Anschlag 25 begrenzt. Es hat sich erwiesen, daß dieses Spiel zweckmäßig bis 4 mm betragen kann. Dieses Spiel 26 ermöglicht es, daß beim Ausfahren des Kolbens 8 aus dem Gehäuse 1 Leckmaterial durch die unvermeidlichen Undichtheiten zwischen Gehäuse 1 und Kolben 8 an der Kante 20 in Richtung des Pfeiles 27 austreten kann. Die Ausführungsform nach Fig. 2 ermöglicht durch eine Abschrägung 28 des Abstreifringes 23 einen besseren Abfluß dieses Leckmateriales, insbesondere, wenn die Vorrichtung so angeordnet ist, daß die Längsachse des Kolbens 8 vertikal steht und so das Leckmaterial nach unten abströmen kann.

Der strenge Sitz des Abstreifringes 23 auf dem Kolben 8 hat - wie erwähnt - zur Folge, daß beim Ausfahren des Kolbens 8 aus dem Gehäuse 1 der Abstreifring 23 das vom Kolben 8 mitgenommene Leckmaterial von der Kolbenoberfläche abstreift. Wirksam wird hiebei vor allem die dem Gehäuse 1 benachbarte Kante 29 der mittigen Öffnung 30 (Fig. 3) des Abstreifringes 23. Allfälliges noch am Kolbenumfang verbliebenes Material wird beim Zurückgehen des Kolbens 8, also beim Wiedereinfahren desselben in das Gehäuse 1, durch die dem Gehäuse 1 abgewendete Kante 31 der Öffnung 30 des Abstreifringes 23 vom Kolben 8 abgestreift.

Die Vorrichtung muß nicht unbedingt als Filtervorrichtung ausgebildet sein. Es kann sich beim Kolben 8 vielmehr auch z.B. um ein Absperrorgan handeln, wobei die axiale Verschiebung des Kolbens 8 bewirkt, daß der Durchströmkanal 2 gesperrt wird. Eine Variante hiezu besteht darin, Kanäle im Kolben 8 derart vorzusehen, daß in der normalen Betriebsstellung des Kolbens 8 der Durchstrom des behandelten Materiales durch den Durchströmkanal 2 ungehindert erfolgt, wogegen in einer anderen Betriebsstellung des Kolbens 8, in welcher dieser axial in Bezug auf das Gehäuse 1 verschoben wird, das Material zwar durch die Zuströmöffnung 4 in das Gehäuse eintritt, das Gehäuse 1 jedoch durch eine andere Öffnung als die Abströmöffnung 6 verläßt, wobei die entsprechende Umleitung des Materiales durch die erwähnten Kanäle im Kolben 8 erfolgt.

**Patentansprüche**

1. Vorrichtung zur Beeinflussung des Durchstromes von in den strömungsfähigen Zustand erwärmtem Kunststoffmaterial durch ein Gehäuse (1), insbesondere eine Filtervorrichtung oder eine Umsteuervorrichtung für das Kunststoffmaterial, mit einem das Gehäuse (1) durchsetzenden Durchströmkanal (2) und einem in einer Bohrung (7) des Gehäuses (1) quer zur Längsrichtung des Durchströmkanales (2) längsverschieblich geführten Kolben (8) mit Kreisquerschnitt, welcher Kolben (8) den Durchströmkanal (2) kreuzt, wobei auf einem aus dem Gehäuse (1) herausragenden Kolbenabschnitt (19) außerhalb des Gehäuses (1) ein ungeschlitzter Abstreifring (23) aufgesetzt ist, für den ein mit dem Gehäuse (1) verbundener Anschlag (25) vorgesehen ist, sodaß der Kolben (8) relativ zum Abstreifring (23) verschiebbar ist, **dadurch gekennzeichnet, daß** der Innendurchmesser $(d_2)$ des Abstreifringes (23) geringer ist als der Durchmesser $(d_0)$ der Bohrung (7) des Gehäuses (1) und auch geringer als der Durchmesser $(d_1)$ des dem Gehäuse (1) abgewendeten, aus dem Gehäuse (1) herausragenden Endes (21) des Kolbenabschnittes (19) im kühlsten Betriebszustand desselben, sodaß der Abstreifring (23) stets mit Vorspannung auf dem Kolbenabschnitt (19) sitzt.

2. Vorrichtung nach Anspruch 1, **dadurch gekennzeichnet, daß** der Innendurchmesser $(d_2)$ des Abstreifringes (23) um 0,12 bis 0,15 % geringer ist als der Durchmesser $(d_0)$ der Bohrung (7) des Gehäuses (1).

3. Vorrichtung nach Anspruch 1 oder 2, **dadurch gekennzeichnet, daß** der Abstreifring (23) mit einer durchschnittlichen Flächenpressung von 1000 bis 2000 N/cm$^2$ auf dem Kolben (8) sitzt.

4. Vorrichtung nach einem der Ansprüche 1 bis 3, **dadurch gekennzeichnet, daß** zwischen dem Abstreifring (23) und dem Gehäuse (1) ein durch den Anschlag (25) begrenztes, in axialer Richtung des Kolbens (8) gemessenes Spiel (26) von 0 bis 4 mm besteht.

**Claims**

1. A device for controlling the flow of plastics material, heated until flowable, through a housing (1), in particular a filtering device or a direction-control device for the plastics material, comprising a flow channel (2) extending through the housing (1), and a plunger (8) of circular cross-section longitudinally displaced in a bore (7) of the housing (1) transversely to the longitudinal direction of the flow channel (2) and crossing the flow channel (2), wherein an unslotted scraper ring (23) is mounted outside the housing (1) on a portion (19) of the plunger projecting from the housing (1), a stop (25) connected to the housing (1) being provided for the scraper ring so that the plunger (8) is displaceable relative thereto, **characterised in that** the inner diameter $(d_2)$ of the scraper ring (23) is smaller than the diameter $(d_0)$ of the bore (7) of the housing (1) and also smaller than the diameter $(d_1)$ of the end (21) of the plunger portion (19) remote from the housing (1) and projecting therefrom in the coldest operating state of that plunger portion so that the scraper ring (23) is always pretensioned on the latter.

2. A device according to claim 1, **characterised in that** the inner diameter $(d_2)$ of the scraper ring (23) is smaller than the diameter (do) of the bore (7) of the housing (1) by 0.12% to 0.15%.

3. A device according to claim 1 or 2, **characterised in that** the scraper ring (23) is mounted on the plunger (8) with an average contact pressure of 1000 - 2000 N/cm$^2$.

4. A device according to any one of claims 1 to 3, **characterised in that** a clearance (26) of 0 mm to 4 mm, measured in the axial direction of the plunger (8) and bounded by the stop (25), is provided between the scraper ring (23) and the housing (1).

**Revendications**

1. Dispositif pour influer sur le débit d'une matière plastique réchauffée de manière à pouvoir s'écouler à travers un boîtier (1), notamment un dispositif de filtrage ou un dispositif d'inversion de mouvement pour la matière plastique, avec un canal de passage (2) traversant le boîtier (1) et un piston (8) à section circulaire guidé à déplacement longitudinal dans un alésage (7) du boîtier (1) transversalement par rapport au sens longitudinal du canal de passage (2), ledit piston (8) croisant le canal de passage (2), un anneau raidisseur non-fendu (23) étant placé, à l'extérieur du boîtier (1), sur une section du piston (19) dépassant le boîtier (1), une butée (25) solidaire du boîtier (1) étant prévue pour cet anneau de manière à ce que le piston (8) puisse se déplacer relativement par rapport à l'anneau raidisseur (23), **caractérisé en ce que** le diamètre intérieur $(d_2)$ de l'anneau raidisseur (23) est inférieur au diamètre $(d_0)$ de l'alésage (7) du boîtier (1) et également inférieur au diamètre $(d_1)$ de l'extrémité (21) de la section du piston (19) opposée au boîtier (1) et le dépassant, dans l'état de fonctionnement le plus froid de la section du piston, si bien que l'anneau raidisseur (23) se présente toujours placé à précontrainte sur la section du piston (19).

2. Dispositif selon la revendication 1 **caractérisé en ce que** le diamètre intérieur ($d_2$) de l'anneau raidisseur (23) est inférieur de 0,12 à 0,15 % par rapport au diamètre ($d_0$) de l'alésage (7) du boîtier (1).

3. Dispositif selon les revendications 1 ou 2 **caractérisé en ce que** l'anneau raidisseur (23) est placé sur le piston (8) en présentant une pression superficielle moyenne de 1000 à 2000 N/cm$^2$.

4. Dispositif selon l'une quelconque des revendications 1 à 3 **caractérisé en ce qu'**il existe, entre l'anneau raidisseur (23) et le boîtier (1), un jeu (26) de 0 à 4 mm limité par la butée (25) et mesuré dans le sens axial du piston (8).

FIG. 1

FIG. 2

FIG. 4

FIG. 3